# EUROPÄISCHE PATENTSCHRIFT

(11) **EP 0 937 967 B1**
(45) Veröffentlichungstag und Bekanntmachung des Hinweises auf die Patenterteilung: **29.12.2004**
(21) Anmeldenummer: 99102395.3
(22) Anmeldetag: 08.02.1999
(51) Int. Cl.: G01F 11/02, G01F 15/12, A47K 5/12, B05B 11/00, B05B 15/02

(54) **Vorrichtung zur Abgabe eines Fluides sowie Ausgabekanüle hierfür**
Fluid dispenser and associated dispensing tubes
Distributeur de fluide et tubes distributeurs associés

(30) Priorität: 23.02.1998 DE 19807647
(43) Veröffentlichungstag der Anmeldung: 25.08.1999
(60) Teilanmeldung: 04008332.1
(73) Patentinhaber: Poulten & Graf GmbH, 97877 Wertheim/Main (DE)
(72) Erfinder: Fessel, Theodor, 91522 Ansbach (DE); Graf, Hans, 97892 Kreuzwertheim (DE)
(74) Vertreter: Grünecker, Kinkeldey, Stockmair & Schwanhäusser Anwaltssozietät

(56) Entgegenhaltungen:
- EP-A- 0 542 241
- FR-A- 2 767 073
- US-A- 4 306 670

## Beschreibung

Die Erfindung betrifft eine Vorrichtung zur Abgabe eines Fluides mit einer Fördereinrichtung mit einem Förder- oder Dosierzylinder, einem in dem Förder- oder Dosierzylinder hin- und hergehend bewegbaren Förder- oder Dosierkolben zum Fördern des Fluides aus einem Behälter und einer Ausgabekanüle mit einer in der Ausgabekanüle gebildeten Ausströmleitung, wobei die Ausströmleitung eine Austrittsöffnung aufweist, an der das geförderte Fluid aus der Ausströmleitung austritt.

Weiter betrifft die Erfindung eine Ausgabekanüle für einen Dosier-Dispenser.

Aus DE 41 37 351 C2 und der EP 0 542 241 A2 ist eine herkömmliche Vorrichtung der eingangs genannten Art bekannt, welche einen Ventilblock mit einem Dreiwegehahn aufweist, über welchen wahlweise eine über einen Dosierzylinder aus einem Behälter geförderte Fluidmenge entweder in eine Ausgabekanüle eingespeist wird oder ohne die Ausgabekanüle zu durchlaufen unmittelbar in den Behälter zurückgeführt werden kann.

Hinsichtlich dieser herkömmlichen Vorrichtung hat es sich als nachteilig erwiesen, daß selbst nach der Durchführung mehrerer Spülvorgänge, bei welchen das über den Dosierzylinder geförderte Fluid wieder in den Behälter zurückgelangt, sich in einer anschließend dosierten Fluidmenge u.U. stark gealterte Fluidfraktionen befinden, da der Ausgabebereich des Spenders außerhalb des Spülkreislaufes verbleibt.

Aus einer weiteren Ausführungsform eines Flaschendispensers der EP 0 542 241 A2 ist eine Spül- und Rückfördermöglichkeit in Gestalt eines auf die Austrittsöffnung aufsteckbaren Rückführschlauches vorgesehen.

Der Erfindung liegt daher die Aufgabe zugrunde, eine Vorrichtung zur Abgabe eines Fluids der eingangs genannten Art dahingehend zu verbessem, daß eine im wesentlichen vollständige Spülung bzw. Fluidrückführung in den zugehörigen Vorratsbehälter gewährleistet werden kann.

Der Erfindung liegt ferner die Aufgabe zugrunde, eine Ausgabekanüle zu schaffen, die eine im wesentlichen vollständige Spülung derselben und die im wesentlichen rückstandslose Rückführung von in einer zugehörigen Dosiervorrichtung verbliebener Flüssigkeit in einen angeschlossenen Vorratsbehälter gestattet.

Hinsichtlich einer Vorrichtung der eingangs genannten Art wird diese Aufgabe erfindungsgemäß dadurch gelöst, daß die Ausgabekanüle zusätzlich zu der Ausströmleitung eine entlang derselben gebildete und integral in die Ausgabekanüle eingeformte Rücklaufleitung zur Rückführung von Fluid in den Behälter aufweist.

Dadurch wird es auf vorteilhafte Weise möglich, im Rahmen eines gegebenenfalls mehrere Pumphübe umfassenden Spülvorganges auch die in der Ausgabekanüle gebildete Ausströmleitung im wesentlichen vollständig zu spülen.

In vorteilhafter Weise ist hierzu im Bereich der Austrittsöffnung der Ausgabekanüle eine Anschlußeinrichtung vorgesehen zum Anschluß der Rücklaufleitung an die Ausströmleitung zum Zurückführen des die Ausströmleitung durchströmenden Fluides in den Behälter. Diese Anschlußeinrichtung kann beispielsweise durch eine an der Ausgabekanüle im Bereich der Austrittsöffnung vorgesehene Kappe gebildet sein. Es ist auch möglich, die Ausgabekanüle im Bereich der Austrittsöffnung mit einer im wesentlichen planen Stirnfläche zu versehen und zwischen der Rücklaufleitung und der Ausströmleitung im Bereich der Austrittsöffnung eine kleine Auskerbung bzw. einen Verbindungskanal vorzusehen, so daß beispielsweise durch Abdecken der genannten Stirnfläche erreicht werden kann, daß das durch die Ausströmleitung geförderte Fluid über die Kerbe oder den Kanal in die Rücklaufleitung zurückströmen kann, und gleichzeitig die Ausströmöffnung dicht verschlossen ist.

In vorteilhafter Weise sind die Ausströmleitung und die Rücklaufleitung gemeinsam in der vorzugsweise aus einem Kunststoffmaterial, oder bei einer besonders hochwertigen Ausführungsform aus Edelstahl gefertigten Ausgabekanüle ausgebildet. Eine derartige Ausgestaltung der Ausgabekanüle erweist sich insbesondere unter fertigungstechnischen Gesichtspunkten im Hinblick auf eine einfache Montage als besonders vorteilhaft und ermöglicht zudem eine effektive Aussteifung der Ausgabekanüle.

Die Ausströmleitung und die Rücklaufleitung sind vorzugsweise gleich lang ausgebildet und weisen in vorteilhafter Weise jeweils den gleichen Kanalquerschnitt auf. Insbesondere bei einer Ausführungsform der Ausgabekanüle aus einem Kunststoffmaterial weisen die beiden Leitungen in vorteilhafter Weise jeweils einen kreisförmigen Querschnitt auf und sind bei einer gespritzten Ausführungsform in Längsrichtung jeweils schwach konisch verjüngt ausgebildet. Bei dieser Ausführungsform lassen sich besonders hohe Oberflächenqualitäten hinsichtlich der die beiden Leitungen begrenzenden Leitungsinnenwandungen erreichen. Bei der Herstellung der Ausgabekanüle aus einem Strangpreßmaterial oder auch spanabhebend, beispielsweise aus einem Teflon-Halbzeug, ist die Ausstoßkanküle mit Vorteil von zylindrischer oder prismatischer Gestalt.

Die Ausströmleitung und die Rücklaufleitung sind in vorteillhafter Weise derart ausgebildet, daß in einem Austrittsbereich der Ausgabekanüle die Austrittsöffnung der Ausströmleitung einer Eintrittsöffnung der Rücklaufleitung unmittelbar benachbart angeordnet ist. Dadurch wird eine unmittelbare Überbrückung der beiden Leitungen möglich. Mit Vorteil sind dabei die Ausströmleitung und die Rücklaufleitung derart ausgebildet, daß deren Längsachsen zueinander parallel verlaufen. Die Ausgabekanüle ist dabei in vorteilhafter Weise derart gestaltet, daß diese in einer zur Längsachse der Ausströmleitung senkrechten Schnittebene einen kreisförmigen, elliptischen oder vorzugsweise "8"-förmigen Querschnitt aufweist.

Eine im Hinblick auf eine unter ergonomischen Gesichtspunkten besonders vorteilhafte Ausführungsform der Erfindung ist dadurch gegeben, daß die Anschlußeinrichtung durch ein Ausgußelement gebildet ist, das in einem, der Ausströmöffnung benachbarten Bereich der Ausgabekanüle angeordnet ist, wobei das Ausgußelement in eine Überbrückungsposition bringbar ist, in welcher die Ausströmleitung mit der Rückführleitung verbunden ist. Das Ausgußelement ist in vorteilhafter Weise mit einer Griffeinrichtung versehen zum manuellen Umschalten zwischen einer Überbrückungsposition, einer Abgabeposition und ggf. auch einer Schließposition, in welcher die Austrittsöffnung der Ausgabekanüle verschlossen ist. Die genannte Griffeinrichtung ist in vorteilhafter Weise einstückig mit dem beispielsweise aus einem Kunststoffmaterial gebildeten Ausgußelement ausgebildet.

Das Ausgußelement ist in vorteilhafter Weise schwenkbewegbar oder verschiebbar an der Ausgabekanüle befestigt. Die Schwenk- oder Verschiebeachse verläuft hierbei im wesentlichen in Längsrichtung der Ausgabekanüle. Das Ausgußelement ist in vorteilhafter Weise verschlußkappenartig ausgebildet und auf einer Außenumfangsfläche der Ausgabekanüle schwenkbewegbar bzw. verschiebbar gelagert.

Bei einer bevorzugten Ausführungsform der Vorrichtung ist die Ausgabekanüle an einem Ventilblock angeschlossen, wobei in dem Ventilblock ein Fluidzufuhrkanal und ein Fluidrücklaufkanal ausgebildet sind, die entsprechend mit der Ausströmleitung und der Rücklaufleitung verbunden sind. Dieser Ventilblock ist dabei in vorteilhafter Weise aus einem Kunststoffmaterial durch Spritz-Formen oder spanend hergestellt. Der in dem Ventilblock gebildete Fluidzufuhrkanal und der ebenfalls in dem Ventilblock gebildete Fluidrücklaufkanal können dabei auf fertigungstechnisch besonders vorteilhafte Weise durch zylindrische Kernelemente gebildet werden, die in den zur Bildung des Ventilblocks in einem Formwerkzeug gebildeten Formraum eindringen und nach Aushärten des Kunststoffmateriales aus diesem abgezogen werden können.

Im Hinblick auf einen einfachen Aufbau eines Formwerkzeuges zur Bildung des Ventilblockes wird die Ausgabekanüle vorzugsweise als separates Bauteil ausgebildet und erst im Rahmen eines Montageschrittes in den Ventilblock eingepreßt. Dadurch wird es zum einen auf vorteilhafte Weise möglich, unterschiedliche Ausgabekanülen und ggf. auch unterschiedliche Ventilblöcke bedarfsgerecht miteinander zu kombinieren. Die Verwendung einer Preß-Verbindungseinrichtung erlaubt eine besonders fest haftende, hochdichte Befestigung der Ausgabekanüle an dem Ventilblock. Alternativ dazu kann die Ausgabekanüle auch über eine Gewindeeinrichtung an dem Ventilblock angebracht werden. Hierzu ist vorzugsweise die Ausgabekanüle oder eine Überwurfmutter mit einem Gewindeabschnitt versehen.

Der Ventilblock kann auch aus einem Block-Material, beispielsweise durch spanabhebende Bearbeitung gebildet sein. Im Hinblick auf eine hohe chemische Beständigkeit besteht der Ventilblock vorzugsweise aus einem Teflon-, Polypropylen- (PP), Polyethylen- (PE) oder Polyamid-Werkstoff.

Eine besonders stabile und im Bereich des Dosierzylinderfußes hochdichte Ausführungsform der Vorrichtung ist dadurch gegeben, daß der Förder- bzw. Dosierzylinder einstückig mit dem Ventilblock ausgebildet ist. Der Förder- bzw. Dosierzylinder und der Ventilblock und ggf. auch die Ausgabekanüle können dabei im Rahmen eines einzigen Kunststoffeinspritzvorganges im Inneren eines entsprechenden Formwerkzeuges gebildet werden, so daß nach Öffnen des Formwerkzeuges eine wenigstens aus Förder- bzw. Dosierzylinder und Ventilblock bestehende Baueinheit dem Formwerkzeug entnommen werden kann. Das Formwerkzeug ist hierzu in vorteilhafter Weise wenigstens zweiteilig ausgebildet, wobei eine zwischen den beiden Formteilen verlaufende Trennfläche vorzugsweise im wesentlichen parallel zu einer Ebene verläuft, die eine Mittelachse des Förder- bzw. Dosierzylinders enthält.

Eine bei der integralen Ausbildung von Förder- bzw. Dosierzylinder und Ventilblock vorteilhafte Ausführungsform der Erfindung ist dadurch gegeben, daß der Förder- bzw. Dosierzylinder einen aus einem Glas-, Keramik- oder duroplastischen Kunststoffmaterial gebildeten Zylinder-Einsatz umfaßt, der in einem einstückig mit dem Ventilblock ausgebildeten Mantelabschnitt aufgenommen, insbesondere eingespritzt ist. Dadurch wird es auf vorteilhafte Weise möglich, eine extrem hohe Dichtwirkung zwischen der Innenwandung des Förder- bzw. Dosierzylinders und einem darin leichtgängig hin- und hergehend bewegbaren Förder- bzw. Dosierkolben sicherzustellen. Aufgrund des vorzugsweise einstückig mit dem Ventilblock ausgebildeten Mantelabschnittes ist für den Zylinder-Einsatz eine effektive Verstärkung und ein effektiver Splitter-Schutz gegeben.

Eine im Hinblick auf eine hohe Materialersparnis vorteilhafte Ausführungsform der Erfindung ist dadurch gegeben, daß der Ventilblock als Skelettkonstruktion mit beabstandeten Stegen ausgebildet ist. Diese zueinander beabstandeten Stege verlaufen dabei in vorteilhafter Weise im wesentlichen parallel zu einer Mittelachse des Förder- bzw. Dosierzylinders. Die einzelnen Stege können zur weiteren Aussteifung des Ventilblockes durch weitere, fachwerkartig angeordnete Querverbindungsstege ausgesteift sein. Um eine besonders stabile Befestigung der Ausgabekanüle an einem derartigen, als Skelettkonstruktion ausgebildeten Ventilblock zu erreichen, ist in vorteilhafter Weise eine Aufnahmeausnehmung zur Aufnahme eines Fußabschnittes der Ausgabekanüle derart angeordnet, daß diese einen der sich axial erstreckenden Stege radial durchsetzt. Eine Mittelachse der vorzugsweise zylindrischen Aufnahmeausnehmung verläuft dabei in vorteilhafter Weise in einer entsprechenden Mittelebene des sich axial erstreckenden Versteifungssteges. Die Aufnahmeausnehmung ist dabei in vorteilhafter Weise in einem topfartigen Wandungsabschnitt aufgenommen. Dieser topfartige Wandungsabschnitt kann zusätzlich durch weitere, beispielsweise radiale Querversteifungsstege noch weiter ausgesteift werden.

Um eine positionsgenaue Befestigung der Ausgabekanüle an dem Ventilblock zu ermöglichen, ist in vorteilhafter Weise durch entsprechende Abschnitte des Ventilblokkes und der Ausgabekanüle eine Positioniereinrichtung gebildet, durch die die Befestigungsposition der Ausgabekanüle an dem Ventilblock eindeutig festgelegt ist. Diese Positioniereinrichtung kann dabei entweder einen kanülenseitig ausgebildeten Eingriffsabschnitt aufweisen, der mit einem ventilblockseitig ausgebildeten Eingriffsgegenabschnitt in Eingriff bringbar ist, oder einen an dem Ventilblock im Bereich der Aufnahmeausnehmung ausgebildeten Eingriffsabschnitt aufweisen, der mit einem kanülenseitig ausgebildeten Eingriffsgegenabschnitt in Eingriff bringbar ist.

Um eine besonders hohe Dichtwirkung und um einen besonders festen Sitz der Ausgabekanüle in dem Ventilblock sicherzustellen, sind an einem Befestigungsabschnitt der Ausgabekanüle vorzugsweise mehrere Dichtlamellen ausgebildet, die unter hoher Flächenpressung mit einem entsprechenden Innen-Umfangsabschnitt einer in dem Ventilblock gebildeten Aufnahmeausnehmung in Kontakt treten.

Hinsichtlich einer Ausgabekanüle wird die eingangs angegebene, der Erfindung zugrundeliegende Aufgabe durch eine Ausgabekanüle gelöst, wie sie im Patentanspruch 20 angegeben ist.

Vorteilhafte Weiterbildungen dieser Ausgabekanüle sind Gegenstand der Unteransprüche.

Weitere Einzelheiten und Merkmale der vorliegenden Erfindung ergeben sich aus der nachfolgenden Beschreibung eines bevorzugten Ausführungsbeispieles in Verbindung mit der Zeichnung. Es zeigen:
- Fig.1: eine in Integralbauweise gebildete Ausgabekanüle mit parallel nebeneinander verlaufenden Ausström- bzw. Rücklaufleitungen;
- Fig.2a: einen Axialschnitt durch eine in einen Sockelbereich eines Dosier-Dispensers eingesetzte Ausgabekanüle, wobei die Ausgabekanüle im Bereich ihrer Austrittsöffnung mit einem Ausgußelement versehen ist, das sich hier in einer Abgabeposition befindet;
- Fig.2b: eine Axialschnittansicht durch die gleiche Ausgabekanüle sowie durch das gleiche Ausgußelement, wobei das Ausgußelement sich jedoch hier in einer Spül-Position befindet;
- Fig.3a: eine Detail-Axialschnittansicht und eine vereinfachte, zugehörige Seitenansicht des Ausgußelementes in Abgabeposition,
- Fig.3b: eine Detail-Axialschnittansicht und eine vereinfachte, zugehörige Seitenansicht des Ausgußelementes in Spülposition,
- Fig.4: eine Axialschnittansicht durch einen Dosier-Dispenser mit integral ausgebildetem Förder- bzw. Dosierzylinder und einer Ausabekanüle mit integral eingeformter Rücklaufleitung.

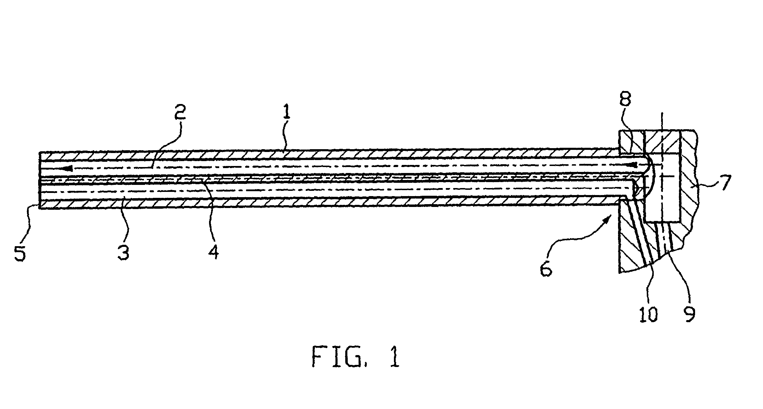

Die in Fig.1 dargestellte Ausgabekanüle umfaßt einen Grundkörper 1, der vorzugsweise aus einem Kunststoffmaterial gefertigt ist. In dem Grundkörper 1 sind sowohl eine Ausströmleitung 2 als auch eine Rücklaufleitung 3 ausgebildet. Die Ausströmleitung 2 und die Rücklaufleitung 3 sind durch einen Trennwandabschnitt 4, der einstükkig mit dem Grundkörper 1 ausgebildet ist, voneinander getrennt. Sowohl die Ausströmleitung 2 als auch die Rücklaufleitung 3 weisen einen kreisförmigen Querschnitt auf und münden bei der hier dargestellten Ausführungsform in eine plan ausgebildete Stirnfläche 5.

Auf einer der Stirnfläche 5 abgewandten Seite des Grundkörpers 1 ist die Ausgabekanüle mit einem Befestigungsabschnitt 6 versehen, über welchen die Ausgabekanüle an einem hier durch das Bezugszeichen 7 bezeichneten Ventilblock anbringbar ist. Der Befestigungsabschnitt 6 umfaßt bei der hier dargestellten Ausführungsform einen im wesentlichen zylindrischen Einpreßzapfenabschnitt 8, der in enger Passung, abdichtend in eine entsprechend ausgebildete Paßbohrung des Ventilblocks 7 eingepreßt ist. Alternativ zu der dargestellten Ausführungsform des Befestigungsabschnittes 6 ist es auch möglich, die Ausgabekanüle integral mit dem Ventilblock 7 auszubilden oder beispielsweise über eine Gewindeeinrichtung mit dem Ventilblock 7 zu verbinden. Die Gewindeeinrichtung ist mit Vorteil derart gestaltet, daß im festgezogenen Zustand zwischen den Gewindeflanken kein Hohlraum verbleibt. Dies kann insbesondere durch ein schwach konisches Gewinde erreicht werden.

In dem hier nur abschnittsweise dargestellten Ventilblock 7 sind ein Fluidzufuhrkanal 9 sowie ein Fluidrücklaufkanal 10 ausgebildet.

Der Fluidzufuhrkanal 9 umfaßt ein hier nicht dargestelltes Saugventil und mündet über eine stirnseitig in dem Befestigungsabschnitt 6 ausgebildete Durchgangsöffnung in die Ausströmleitung 2. Die in dem Grundkörper 1 ausgebildete Rücklaufleitung 3 steht über eine, den Befestigungs- bzw. Einpreßzapfenabschnitt 8 oder Gewindezapfenabschnitt radial durchsetzende Durchgangsbohrung mit dem Fluidrücklaufkanal 10 in Verbindung. Der Fluidrücklaufkanal 10 ist hier als im wesentlichen geradliniger Kanal ausgebildet und erstreckt sich schwach geneigt von einem unteren Bereich des Ventilblockes 7 zu dem Befestigungsabschnitt 8. Durch die hohe Flächenpressung zwischen dem Befestigungsabschnitt 8 und der Innenwandung der in dem Ventilblock 7 ausgebildeten Befestigungsbohrung wird eine hohe Dichtigkeit des Übergangsbereiches zwischen der Rücklaufleitung 3 und dem in dem Ventilblock 7 ausgebildeten Fluidrücklaufkanal 10 erreicht.

Bei der hier dargestellten Ausführungsform sind die Ausströmleitung 2 und die Rücklaufleitung 3 in nebeneinanderliegender Weise ausgebildet. Es ist auch möglich, die Ausströmleitung 2 und die Rücklaufleitung 3 zueinander koaxial auszubilden, so daß eine der beiden Leitungen durch einen entsprechend dimensionierten Ringraum gebildet ist. Die Rücklaufleitung 3 erstreckt sich durchgängig ununterbrochen von der Austrittsöffnung der Ausströmleitung 2 zurück zu dem Ventilblock 7.

Eine vollständige Spülung der Ausströmleitung 2 kann beispielsweise dadurch erreicht werden, daß auf den Grundkörper 1 im Bereich der Stirnfläche 5 ein Kappenelement aufgesetzt wird, das eine Verbindung zwischen der Ausströmleitung 2 und der Rücklaufleitung 3 herstellt.

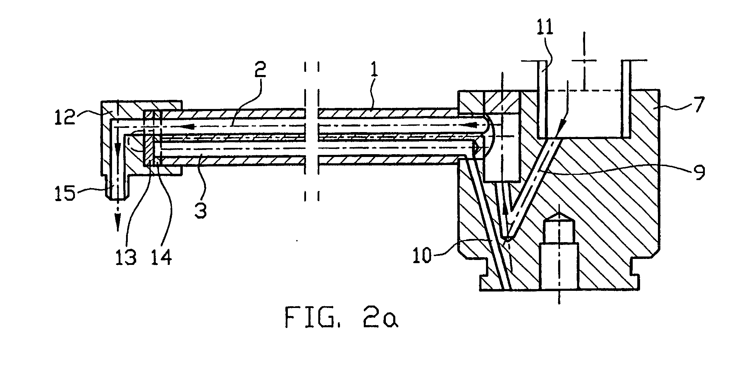

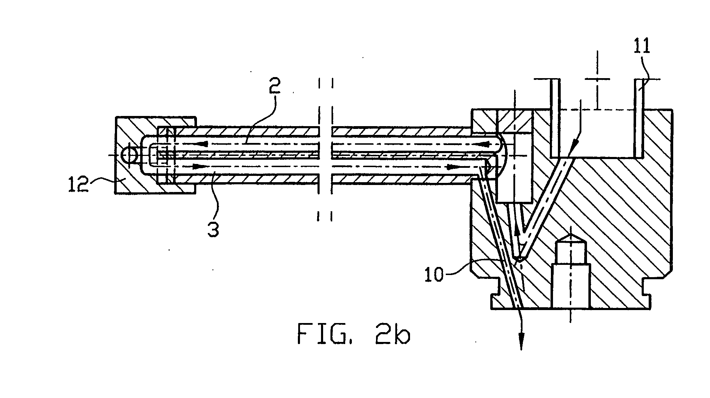

Anstelle einer derartigen Überbrückungseinrichtung kann ein Ausgußelement 12 verwendet werden, wie dies nachfolgend in Verbindung mit den Fig.2a und 2b beschrieben wird.

Die Darstellungen gemäß den Fig.2a und 2b sind abgesehen von jeweils unterschiedlichen Schaltstellungen des Ausgußelementes 12 identisch.

Abweichend von der Darstellung gemäß Fig.1 ist der zur Aufnahme der Ausgabekanüle vorgesehene Ventilblock 7 mit einem durch das Bezugszeichen 11 bezeichneten (nur teilweise dargestellten) Förder- bzw. Dosierzylinder hier vollständig gezeigt. Die hier dargestellte Ausgabekanüle ist an dem Ventilblock 7 in gleicher Weise befestigt, wie dies vorab bereits in Verbindung mit Fig.1 erläutert wurde.

An ihrem, dem Ventilblock 7 abgewandten Ende ist die Ausgabekanüle mit einem Ausgußelement 12, das schwenkbewegbar oder verschiebbar an dem Grundkörper 1 angebracht ist, versehen. In der hier dargestellten Position befindet sich das Ausgußelement in einer Abgabestellung und gestattet die Abströmung eines durch den Förder- bzw. Dosierzylinder zunächst über eine hier nicht dargestellte Ansaugleitung angesaugten Fluides über den Fluidzufuhrkanal 9 und die Ausströmleitung 2. Um eine besonders leichtgängige Bewegung des Ausgußelementes 12 relativ zu dem Grundkörper 1 zu ermöglichen, und um ferner eine zuverlässige Abdichtung der Eintrittsmündung der Rücklaufleitung 3 zu ermöglichen, sind zwischen dem Ausgußelement 12 und dem Grundkörper 1 zwei Gleitscheiben 13, 14 vorgesehen, die über das Ausgußelement 12 und eine hier nicht näher dargestellte Eingriffsstruktur zwischen dem Ausgußelement 12 und dem Grundkörper 1 in enger Anlage an der in Fig.1 mit dem Bezugszeichen 5 bezeichneten Stirnfläche gehalten sind.

Die Gleitscheiben 13, 14 sind vorzugsweise aus einem Glas-, Kunststoff- oder Keramikmaterial gebildet und mit Durchgangsöffnungen versehen, die je nach Position des Ausgußelementes 12 in Deckung bringbar sind.

Das Ausgußelement 12 ist bei der hier dargestellten Ausführungsform um eine parallel zur Mittelachse des Grundkörpers 1 der Ausgabekanüle verlaufende Schwenkachse schwenkbewegbar. In dem Ausgußelement 12 ist eine kurze Umlenkbohrung 15 oder Umlenkkanal ausgebildet, über welche das aus der Ausgabekanüle austretende Fluid umgelenkt wird.

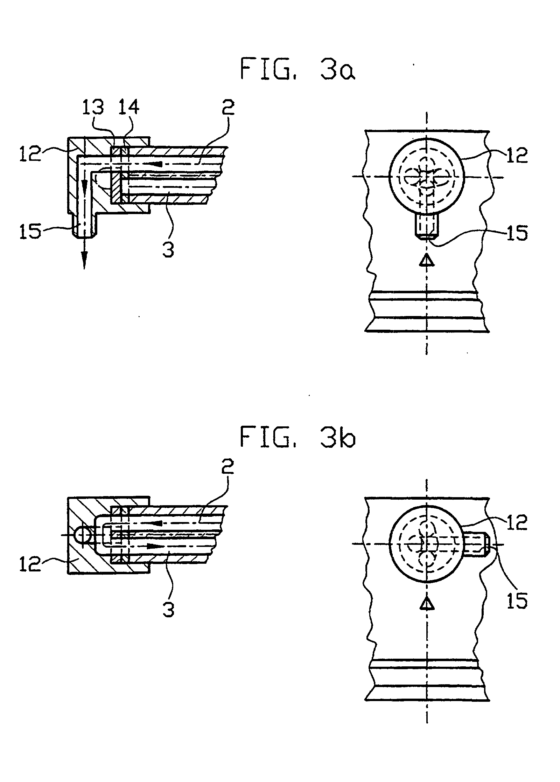

Bei der in Fig.2b dargestellten Funktionsposition des Ausgußelementes 12 überbrückt dieses die Ausströmleitung 2 und die Rücklaufleitung 3 und ermöglicht dadurch den vereinfacht durch Pfeile angedeuteten Fluidstrom von dem Förder- bzw. Dosierzylinder 11 zurück in einen hier nicht dargestellten Behälter bzw. vergleichbare Sammeleinrichtung. Dadurch wird es beispielsweise möglich, eine größere Fluidmenge über den Förder- bzw. Dosierzylinder 11 und durch die Ausgabekanüle 12 hindurch zu fördem, wodurch sichergestellt ist, daß sich in der Ausgabekanüle 12 kein mittlerweile gealtertes oder beispielsweise durch Trocknung hinsichtlich seiner Konzentration verändertes Fluid befindet. Der Aufbau und die Funktionsweise des vorangehend beschriebenen Ausgußelementes 12 werden nachfolgend in Verbindung mit den Figuren 3a und 3b noch näher erläutert.

Bei der Prinzipdarstellung gem. Fig.3a befindet sich das Ausgußelement 12 in der bereits in Verbindung mit Fig.2a erläuterten Schaltposition. Eine in dem Ausgußelement 12 gebildete Umlenkbohrung 15 bzw. der Umlenkkanal weist dabei in Abgabeposition in vertikaler Richtung nach unten. In dieser Schaltposition des Ausgußelementes 12 geraten die in den Gleitscheiben 13 und 14 gebildeten Durchgangsbohrungen derart in Deckung, daß das zugeführte Fluid aus der Ausströmleitung 2 abfließen kann. Wird nunmehr das Ausgußelement 12 aus der in Fig.3a dargestellten Schaltposition in die in Fig.3b dargestellte Schaltposition geschwenkt, so wird die in der Ausgabekanüle gebildete Ausströmleitung 2 mit der Rücklaufleitung 3 verbunden, wodurch ein vollständiger Fluid-Austausch des in der Ausströmleitung 2 zunächst befindlichen Fluides möglich wird.

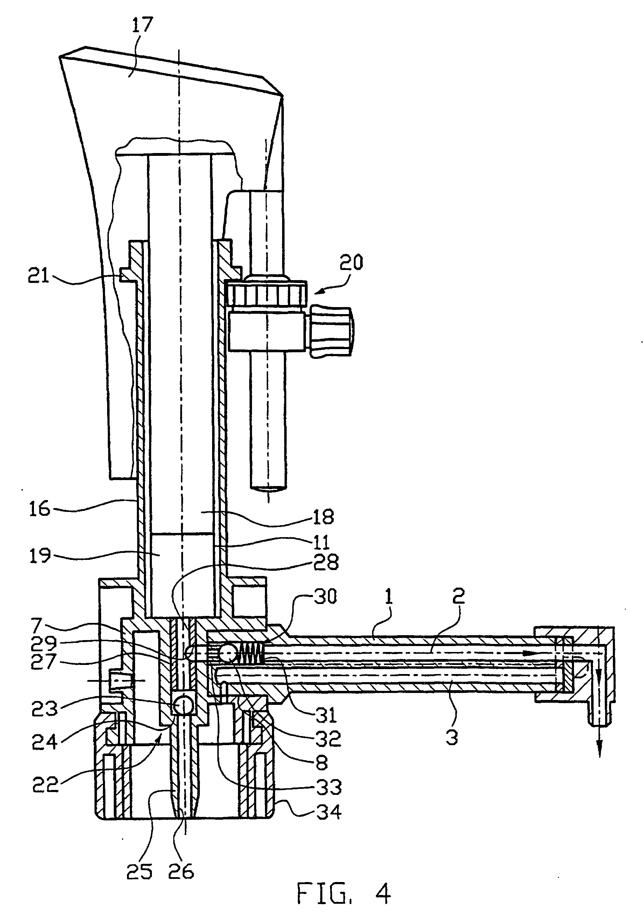

Die Darstellung gemäß Fig.4 zeigt eine Axialschnittansicht durch einen Dosierdispenser mit einem integral mit dem Ventilblock 7 ausgebildeten Förder- bzw. Dosierzylinder 11, wobei der Förder- bzw. Dosierzylinder 11 in einem einstückig mit dem Ventilblock 7 ausgebildeten Mantelabschnitt 16 aufgenommen ist. In dem Förder- bzw. Dosierzylinder 11 ist ein mittels einer Handgriffeinrichtung 17 in vertikaler Richtung auf- und abwärts bewegbarer Förder- bzw. Dosierkolben 18 aufgenommen. Der Förder- bzw. Dosierkolben ist bei der hier dargestellten Ausführungsform als Präzisionsgeschliffener Kolben ausgebildet und begrenzt einen in dem Förder- bzw. Dosierzylinder 11 hinsichtlich seines Volumens veränderbaren Förder- bzw. Dosierraum 19. Mittels einer Einstelleinrichtung 20 kann der zulässige Hub des Förder- bzw. Dosierkolbens 18 und damit das Maximal-Volumen des Förder- bzw. Dosierraumes 19 eingestellt werden. Die Einstelleinrichtung 20 wirkt dabei mit einem Anschlag 21 zusammen, der einstückig mit dem Mantelabschnitt 16 ausgebildet ist. Der Anschlag 21 umgibt einen oberen Endbereich des Förder- bzw. Dosierzylinders 11 und bildet zudem ein Verstärkungsglied zur Verstärkung der oberen Öffnung des Förder- bzw. Dosierzylinders 11.

In dem Ventilblock 7 ist ein Behälterventil 22 vorgesehen, das bei der hier dargestellten Ausführungsform eine Ventilkugel 23 umfaßt, die auf einem Präzisionsventilsitz 24 aufsitzt, der bei der hier dargestellten Ausführungsform durch einen präzisionsgeformten Oberflächenabschnitt des Ventilkörpers 7 gebildet ist. Unterhalb des Behälterventiles 22 erstreckt sich ein in einem Schlauchzapfen 25 gebildeter Ansaugkanal 26. Der Öffnungshub der Ventilkugel 23 wird durch ein Buchsenelement 27 begrenzt, das durch den Förder- bzw. Dosierzylinder 11 hindurch in den Ventilblock 7 eingepreßt ist.

Das Buchsenelement 27 bildet einen Fluiddurchgangsweg 28, der den Ansaugkanal 26 über das Behälterventil 22 mit dem Förder- bzw. Dosierraum 19 verbindet. Das Buchsenelement 27 ist mit einer radialen Durchgangsöffnung 29 versehen, die den Fluiddurchgangsweg 28 mit einem in dem Grundkörper 1 der Ausgabekanüle aufgenommenen Ventil 30 verbindet. Das in dem Grundkörper 1 aufgenommene Ventil 30 umfaßt eine mittels einer Feder 31 in eine Schließstellung gedrängte Ventilkugel 32 und ein in den Grundkörper 1 der Ausgabekanüle eingepreßtes Ventilsitzelement 33, das bei der hier dargestellten Ausführungsform aus einem Kunststoff-, Glas- bzw. Keramikmaterial gebildet ist.

Die genannte Ventilfeder 31 sitzt in der, in der Ausgabekanüle gebildeten Ausströmleitung 2, die sich durchgängig von dem Ventil 30 bis zu ihrer Austrittsöffnung erstreckt.

Die Austrittsöffnung der Ausströmleitung 2 ist unmittelbar benachbart der Eintrittsöffnung der Rücklaufleitung 3 angeordnet. Die in der Ausgabekanüle verlaufende Rücklaufleitung 3 weist im wesentlichen die gleiche Länge auf wie die in der Ausgabekanüle ausgebildete Ausströmleitung 2. Die Ausgabekanüle ist in den Ventilblock 7 über den Einpreßzapfenabschnitt 8 eingepreßt. Der Einpreßzapfenabschnitt 8 ist mit einer radialen Durchgangsbohrung versehen, die mit einer in dem Ventilblock ausgebildeten Fluidwegeinrichtung verbunden ist, über welche etwaig über die Rücklaufleitung gefördertes Fluid in den Behälter zurückgelangen kann.

Der Ventilblock 7 ist hier als Skelettkonstruktion ausgebildet und mittels einer Überwurfmutter 34 an einem Behälter oder beispielsweise auch an einem Versorgungssockel einer automatisch betätigten Dosiervorrichtung anbringbar. Alternativ zu der hier dargestellten Ausführungsform mit eingepreßter Ausgabekanüle ist es in vorteilhafter Weise auch möglich, die Ausgabekanüle, den Ventilblock 7 und den Mantelabschnitt 16 einstückig, d.h. als Integralteil auszubilden. Bei einer entsprechenden Integral-Ausführungsform entfällt in vorteilhafter Weise das Ventilsitzelement 33, und eine entsprechende Ventilsitzfläche wird durch eine Umfangswandung der, das Buchsenelement 27 radial durchsetzenden Durchgangsbohrung gebildet. Die Ventilkugel 32 und ggf. auch die Ventilfeder 31 können dabei entweder vor Einpressen des Buchsenelementes 27 in den Ventilblock 7 eingesetzt werden, oder alternativ dazu durch die Ausströmleitung 2 hindurch in den Ventilblock 7 eingeführt werden. Insbesondere bei dieser Integralausführungsform sind die Ausströmleitung 2 und die Rücklaufleitung 3 koaxial zueinander ausgebildet, wobei vorzugsweise die Ausströmleitung 2 die Rücklaufleitung 3 umgibt.

Die Erfindung ist nicht auf die vorangehend beschriebenen Ausführungsformen beschränkt. Beispielsweise ist es auch möglich, insbesondere bei einer Ausführungsform der Ausgabekanüle mit koaxial angeordneten Kanälen das Ausgußelement in die Ausgabekanüle einzustecken. Es ist auch möglich, das Ausgußelement als von der Ausgabekanüle abnehmbare Kappe auszugestalten, und beispielsweise durch entsprechendes Aufstecken des Ausgußelementes entweder eine Verbindung zwischen der Ausströmleitung und der Rücklaufleitung zu erzeugen, oder eine Fluidableitung aus der Ausströmleitung zuzulassen.

Es ist auch möglich, die Ausgabekanüle gekrümmt auszubilden, so daß die im Austrittsbereich der Auströmleitung befindliche Austrittsöffnung in Gebrauchsposition einer entsprechenden Vorrichtung nach unten weist. Es ist auch möglich, die Ausgabekanüle im Bereich ihrer Stirnfläche 5 zu verschließen und insbesondere bezüglich der Ausströmleitung eine Fluidableitung durch eine radiale, die Umfangswandung der Ausgabekanüle durchsetzende Bohrung vorzunehmen. Bei einer derartigen Ausführungsform der Ausgabekanüle bildet in vorteilhafter Weise die in Gebrauchsposition unten liegende bzw. bei koaxialer Kanalanordnung die außen liegende Fluidwegeinrichtung die Ausströmleitung.

Es ist auch möglich, in dem, in den Behälter zurückführenden Fluidweg ein Ventil, insbesondere ein Kugelventil vorzusehen, das einen Fluid-Austritt, beispielsweise aufgrund einer Druckänderung in dem Behälter, verhindert. Dieses Ventil ist in vorteilhafter Weise im Bereich der Eintrittsmündung der Rücklaufleitung oder auch in dem Ventilblock angeordnet. Das Ausgußelement ist in vorteilhafter Weise derart ausgebildet, daß dieses in eine Nicht-Gebrauchsstellung bringbar ist, in welcher die beiden in der Ausgabekanüle ausgebildeten Leitungen nach außen hin abgesperrt sind.

## Patentansprüche

1. Vorrichtung zur Abgabe eines Fluides mit einer Fördereinrichtung mit einem Förder- oder Dosierzylinder (11), einem in dem Förder- oder Dosierzylinder (11) hinund hergehend bewegbaren Förder- oder Dosierkolben (18) zum Fördern des Fluides aus einem Behälter und einer Ausgabekanüle mit einer in der Ausgabekanüle gebildeten Ausströmleitung (2), wobei die Ausströmleitung (2) eine Austrittsöffnung aufweist, an der das geförderte Fluid aus der Ausströmleitung (2) austritt, **dadurch gekennzeichnet, daß** die Ausgabekanüle zusätzlich zu der Ausströmleitung (2) eine entlang derselben gebildete und integral in die Ausgabekanüle eingeformte Rücklaufleitung (3) zur Rückführung von Fluid in den Behälter aufweist.

2. Vorrichtung nach Anspruch 1, **dadurch gekennzeichnet, daß** im Bereich der Austrittsöffnung eine Anschlußeinrichtung vorgesehen ist, zum Anschluß der Rücklaufleitung (3) an die Ausströmleitung (2) zum Zurückführen des die Ausströmleitung durchströmenden Fluides in den Behälter.

3. Vorrichtung nach Anspruch 1 oder 2, **dadurch gekennzeichnet, daß** die Ausströmleitung (2) und die Rücklaufleitung (3) im wesentlichen gleich lang ausgebildet sind.

4. Vorrichtung nach wenigstens einem der Ansprüche 1 bis 3, **dadurch gekennzeichnet, daß** die Austrittsöffnung der Ausströmleitung (2) benachbart zu einer Eintrittsöffnung der Rücklaufleitung (3) angeordnet ist.

5. Vorrichtung nach einem der Ansprüche 2 bis 4, **dadurch gekennzeichnet, daß** die Anschlußeinrichtung durch ein Ausgußelement (12) gebildet ist, das in einem der Ausströmöffnung benachbarten Bereich der Ausgabekanüle angeordnet ist, wobei das Ausgußelement (12) in eine Überbrückungsposition bringbar ist, in welcher die Ausströmleitung (2) mit der Rücklaufleitung (3) verbunden ist.

6. Vorrichtung nach Anspruch 5, **dadurch gekennzeichnet, daß** das Ausgußelement (12) mit einer Griffeinrichtung versehen ist, zum manuellen Umschalten zwischen einer Überbrückungsposition und einer Abgabeposition.

7. Vorrichtung nach Anspruch 5 oder 6, **dadurch gekennzeichnet, daß** das Ausgußelement (12) um eine Schwenkachse schwenkbewegbar ist.

8. Vorrichtung nach Anspruch 7, **dadurch gekennzeichnet, daß** die Schwenkachse im wesentlichen in Längsrichtung der Ausgabekanüle verläuft.

9. Vorrichtung nach wenigstens einem der Ansprüche 1 bis 8, **dadurch gekennzeichnet, daß** die Ausgabekanüle an einen Ventilblock (7) angeschlossen ist, und daß in dem Ventilblock (7) ein Fluidzuführkanal (9) und ein Fluidrücklaufkanal (20) ausgebildet sind, die entsprechend mit der Ausströmleitung (2) und der Rücklaufleitung (3) verbunden sind.

10. Vorrichtung nach wenigstens einem der Ansprüche 1 bis 9, **dadurch gekennzeichnet, daß** die Ausgabekanüle in den Ventilblock (7) eingepreßt ist.

11. Vorrichtung nach wenigstens einem der Ansprüche 1 bis 10, **dadurch gekennzeichnet, daß** der Förder- bzw. Dosierzylinder (11) einstückig mit dem Ventilblock (7) ausgebildet ist.

12. Vorrichtung nach wenigstens einem der Ansprüche 1 bis 10, **dadurch gekennzeichnet, daß** der Förder- bzw. Dosierzylinder (11) in den Ventilblock (7) eingeschraubt ist.

13. Vorrichtung nach wenigstens einem der Ansprüche 1 bis 12, **dadurch gekennzeichnet, daß** der Förder- bzw. Dosierzylinder (11) einen aus einem Glas-, Keramik-, thermoplastischen oder duroplastischen Kunststoffmaterial gebildeten Zylinder-Einsatz umfaßt, der in einem einstückig mit dem Ventilblock (7) ausgebildeten Mantelabschnitt (16) aufgenommen, insbesondere eingespritzt ist.

14. Vorrichtung nach wenigstens einem der Ansprüche 1 bis 13, **dadurch gekennzeichnet, daß** der Ventilblock (7) als Skelettkonstruktion mit beabstandeten Stegen ausgebildet ist.

15. Vorrichtung nach Anspruch 14, **dadurch gekennzeichnet, daß** der Ventilblock (7) mit einer Aufnahmeausnehmung versehen ist zur Aufnahme eines Fußabschnittes der Ausgabekanüle, wobei die Aufnahmeausnehmung an dem Ventilblock (7) derart ausgebildet ist, daß diese einen sich in einer Axial-Ebene erstreckenden Steg radial durchsetzt.

16. Vorrichtung nach einem der Ansprüche 1 bis 15, **dadurch gekennzeichnet, daß** eine Ausgabekanülen-Positioniereinrichtung vorgesehen ist zur Festlegung der Position der Ausgabekanüle an dem Ventilblock (7).

17. Vorrichtung nach Anspruch 16, **dadurch gekennzeichnet, daß** die Ausgabekanülen-Positioniereinrichtung einen kanülenseitig ausgebildeten Eingriffsabschnitt aufweist, der mit einem ventilblockseitig ausgebildeten Eingriffsgegenabschnitt in Eingriff bringbar ist.

18. Vorrichtung nach Anspruch 16, **dadurch gekennzeichnet, daß** an dem Ventilblock (7) im Bereich der Aufnahmeausnehmung ein Eingriffsabschnitt ausgebildet ist, der mit einem ausgabekanülenseitig ausgebildeten Eingriffsgegenabschnitt in Eingriff bringbar ist.

19. Ausgabekanüle für einen Dosier-Dispenser mit einer ersten Kanaleinrichtung (2) zur Abgabe eines Fluides über eine Austrittsöffnung und einer zweiten Kanaleinrichtung (3), die sich entlang der ersten Kanaleinrichtung (2) erstreckt, wobei die Kanaleinrichtungen (2, 3) integral in die Ausgabekanüle eingeformt sind und beide Kanaleinrichtungen (2, 3) im Bereich der Austrittsöffnung verbindbar sind, zur Überführung eines durch die erste Kanaleinrichtung (2) geförderten Fluides in die zweite Kanaleinrichtung (3).

20. Ausgabekanüle nach Anspruch 19, **dadurch gekennzeichnet, daß** diese einen langgestreckten Grundkörper (1) aufweist, an dessen einem Ende die Austrittsöffnung ausgebildet ist, wobei der Grundkörper (1) an seinem der Austrittsöffnung abgewandten Ende einen Verbindungsabschnitt (6) aufweist, über welchen der Grundkörper (1) mit einem Ventilblock (7) des Dosier-Dispensers verbindbar ist.

21. Ausgabekanüle nach Anspruch 19 oder 20, **dadurch gekennzeichnet, daß** die erste und die zweite Kanaleinrichtung zueinander parallel ausgebildet sind.

22. Ausgabekanüle nach einem der Ansprüche 19 bis 21, **dadurch gekennzeichnet, daß** die erste und die zweite Kanaleinrichtung in den Grundkörper (1) eingeformt sind.

23. Ausgabekanüle nach einem der Ansprüche 19 bis 22, **dadurch gekennzeichnet, daß** die, die erste und die zweite Kanaleinrichtung jeweils definierende Wandung durch den Grundkörper (1) gebildet ist.

24. Ausgabekanüle nach wenigstens einem der Ansprüche 19 bis 23, **dadurch gekennzeichnet, daß** wenigstens eine der ersten und zweiten Kanaleinrichtungen im Bereich des Verbindungsabschnittes (6) einen stirnseitigen Endabschnitt des Grundkörpers (1) durchsetzt.

25. Ausgabekanüle nach wenigstens einem der Ansprüche 19 bis 24, **dadurch gekennzeichnet, daß** wenigstens eine der ersten und zweiten Kanaleinrichtungen im Bereich des Verbindungsabschnitts (6) eine Umfangsaußenfläche des Grundkörpers (1) durchsetzt.

26. Ausgabekanüle nach einem der Ansprüche 19 bis 25, **dadurch gekennzeichnet, daß** die erste, zur Abgabe eines Fluides über die Austrittsöffnung vorgesehene Kanaleinrichtung den stirnseitigen Endabschnitt des Grundkörpers (1) durchsetzt und über die dabei gebildete Eintrittsmündung mit einem in dem Ventilblock (7) gebildeten Fluidzufuhrkanal (9) in Fluidverbindung steht.

27. Ausgabekanüle nach einem der Ansprüche 19 bis 26, **dadurch gekennzeichnet, daß** die zweite, die Rücklaufleitung (3) bildende Kanaleinrichtung die Umfangsaußenfläche des Grundkörpers (1) im Bereich eines Befestigungsabschnittes durchsetzt und die so gebildete Rücklaufmündung mit einem, in dem Ventilblock (7) gebildeten Fluidrücklaufkanal (10) in Fluidverbindung steht.

28. Ausgabekanüle nach einem der Ansprüche 20 bis 27, **dadurch gekennzeichnet, daß** der Verbindungsabschnitt als Einpreßzapfenabschnitt (8) ausgebildet ist.

29. Ausgabekanüle nach einem der Ansprüche 20 bis 27, **dadurch gekennzeichnet, daß** der Verbindungsabschnitt als Gewindezapfen ausgebildet ist.

30. Ausgabekanüle nach einem der Ansprüche 19 bis 29, **dadurch gekennzeichnet, daß** im Bereich der Austrittsöffnung der ersten Kanaleinrichtung ein Ausgußelement (12) vorgesehen ist, das in eine Überbrückungsposition bringbar ist, in welcher das aus der Austrittsöffnung der ersten Kanaleinrichtung (2) abströmende Fluid in die zweite Kanaleinrichtung (3) rückführbar ist.

31. Ausgabekanüle nach Anspruch 30, **dadurch gekennzeichnet, daß** der Grundkörper (1) eine plane Stirnfläche (5) aufweist, und daß das Ausgußelement (12) auf die plane Stirnfläche (5) aufgesetzt ist.

32. Ausgabekanüle nach Anspruch 31, **dadurch gekennzeichnet, daß** zwischen dem Ausgußelement (12) und der planen Stirnfläche (5) wenigstens eine Gleitscheibe (13, 14) vorgesehen ist, wobei die Gleitscheibe (13, 14) eine Durchgangsöffnung aufweist, die wahlweise eine Fluidverbindung zwischen der Austrittsöffnung der Ausströmleitung (2) und der Rücklaufleitung (3) bildet.

33. Ausgabekanüle nach einem der Ansprüche 19 bis 32, **dadurch gekennzeichnet, daß** in einer Stimfläche der Ausgabekanüle und in einer Stimfläche des Ausgußelementes Kanäle ausgebildet sind.

## Claims

1. Device for dispensing a fluid having a delivery mechanism with a delivery or metering cylinder (11), a delivery or metering plunger (18) which can be displaced in a reciprocating motion in the delivery or metering cylinder (11) in order to dispense fluid from a container, and a dispensing tube with an outlet line (2) disposed in the dispensing tube, the outlet line (2) having an outlet orifice at which the delivered fluid is discharged from the outlet line (2), **characterised in that**, in addition to the outlet line (2), the dispensing tube additionally has a return line (3) disposed along the latter and integrally formed in the dispensing tube for returning fluid to the container.

2. Device as claimed in claim 1, **characterised in that** a connecting device is provided in the region of the outlet orifice for connecting the return line (3) to the outlet line (2) in order to return fluid flowing through the outlet line into the container.

3. Device as claimed in claim 1 or 2, **characterised in that** the outlet line (2) and the return line (3) are of essentially the same length.

4. Device as claimed in at least one of claims 1 to 3, **characterised in that** the outlet orifice of the outlet line (2) is disposed adjacent to an inlet orifice of the return line (3).

5. Device as claimed in one of claims 2 to 4, **characterised in that** the connecting device is provided in the form of a spout element (12) disposed in a region of the dispensing tube adjacent to the outlet orifice, which spout element (12) can be moved into a bridging position in which the outlet line (2) is connected to the return line (3).

6. Device as claimed in claim 5, **characterised in that** the spout element (12) is provided with a gripping device for manually switching between a bridging position and a dispensing position.

7. Device as claimed in claim 5 or 6, **characterised in that** the spout element (12) is pivotable about a pivot axis.

8. Device as claimed in claim 7, **characterised in that** the pivot axis extends substantially in the longitudinal direction of the dispensing tube.

9. Device as claimed in at least one of claims 1 to 8, **characterised in that** the dispensing tube is connected to a valve block (7), and a fluid delivery passage (9) and a fluid return passage (20) are disposed in the valve block (7), which are connected accordingly to the outlet line (2) and the return line (3).

10. Device as claimed in at least one of claims 1 to 9, **characterised in that** the dispensing tube is pressed into the valve block (7).

11. Device as claimed in at least one of claims 1 to 10, **characterised in that** the delivery or metering cylinder (11) is integral with the valve block (7).

12. Device as claimed in at least one of claims 1 to 10, **characterised in that** the delivery or metering cylinder (11) is screwed into the valve block (7).

13. Device as claimed in at least one of claims 1 to 12, **characterised in that** the delivery or metering cylinder (11) is a cylinder-insert made from a glass, ceramic, thermoplastic or thermosetting plastic material, which is accommodated in a casing portion (16) integral with the valve block (7) and in particular is injection-moulded.

14. Device as claimed in at least one of claims 1 to 13, **characterised in that** the valve block (7) is a skeleton construction with spaced-apart webs.

15. Device as claimed in claim 14, **characterised in that** the valve block (7) is provided with a housing recess for housing a base portion of the dispensing tube, which housing recess is disposed on the valve block (7) in such a way that it extends radially through a web extending in an axial plane.

16. Device as claimed in one of claims 1 to 15, **characterised in that** a dispensing tube positioning device is provided for fixing the position of the dispensing tube on the valve block (7).

17. Device as claimed in claim 16, **characterised in that** the dispensing tube positioning device has an engaging portion on the tube, which can be moved into engagement with an engaging portion on the valve block.

18. Device as claimed in claim 16, **characterised in that** an engaging portion is provided on the valve block (7) in the region of the housing orifice, which can be moved into engagement with an engaging portion on the dispensing tube.

19. Dispensing tube for a metering dispenser with a first passage system (2) for dispensing a fluid via an outlet orifice and a second passage system (3) extending along the first passage system (2), which passage systems (2, 3) are integrally formed in the dispensing tube, and both passage systems (2, 3) can be connected in the region of the outlet orifice in order to transfer a fluid delivered through the first passage system (2) into the second passage system (3).

20. Dispensing tube as claimed in claim 19, **characterised in that** it has an elongate base body (1) at the end of which is the outlet orifice, the base body (1) having a connecting portion (6) at its end remote from the outlet orifice by means of which the base body (1) can be connected to a valve block (7) of the metering dispenser.

21. Dispensing tube as claimed in claim 19 or 20, **characterised in that** the first and the second passage system are disposed parallel with one another.

22. Dispensing tube as claimed in one of claims 19 to 21, **characterised in that** the first and the second passage system are incorporated in the base body (1).

23. Dispensing tube as claimed in one of claims 19 to 22, **characterised in that** the first and the second passage system each have a wall defined by the base body (1).

24. Dispensing tube as claimed in at least one of claims 19 to 23, **characterised in that** at least one of the first and second passage systems extends through a terminal-face end portion of the base body (1) in the region of the connecting portion (6).

25. Dispensing tube as claimed in at least one of claims 19 to 24, **characterised in that** at least one of the first and second passage systems extends through a peripheral external face of the base body (1) in the region of the connecting portion (6).

26. Dispensing tube as claimed in one of claims 19 to 25, **characterised in that** the first passage system for dispensing a fluid via the outlet orifice extends through the terminal-face end portion of the base body (1) and establishes a fluid connection with a fluid delivery passage (9) disposed in the valve block (7) via the resultant inlet orifice.

27. Dispensing tube as claimed in one of claims 19 to 26, **characterised in that** the second passage system constituting the return line (3) extends through the peripheral external face of the base body (1) in the region of a fixing portion and the resultant return orifice establishes a fluid connection with a fluid return passage (10) disposed in the valve block (7).

28. Dispensing tube as claimed in one of claims 20 to 27, **characterised in that** the connecting portion is a push-in pipe portion (8).

29. Dispensing tube as claimed in one of claims 20 to 27, **characterised in that** the connecting portion is a threaded pipe.

30. Dispensing tube as claimed in one of claims 19 to 29, **characterised in that** a spout element (12) is provided in the region of the outlet orifice of the first passage system, which can be moved into a bridging position in which fluid flowing out of the outlet orifice of the first passage system (2) can be returned to the second passage system (3).

31. Dispensing tube as claimed in claim 30, **characterised in that** the base body (1) has a flat end face (5) and the spout element (12) is placed on the flat end face (5).

32. Dispensing tube as claimed in claim 31, **characterised in that** at least one sliding disc (13, 14) is disposed between the spout element (12) and the flat end face (5), which sliding disc (13, 14) has an end-to-end orifice which selectively forms a fluid connection between the outlet orifice of the outlet line (2) and the return line (3).

33. Dispensing tube as claimed in one of claims 19 to 32, **characterised in that** passages are provided in an end face of the dispensing tube and in an end face of the spout element.

## Revendications

1. Distributeur de fluide avec un dispositif d'extraction doté d'un cylindre d'extraction ou de dosage (11), d'un piston d'extraction ou de dosage (18) pouvant être déplacé dans un mouvement de va-et-vient dans le cylindre d'extraction ou de dosage (11) en vue d'extraire le fluide à partir d'un récipient, et d'un tube distributeur avec une conduite d'évacuation (2) formée dans ce tube distributeur, sachant que la conduite d'évacuation (2) comporte un orifice de sortie, par lequel le fluide extrait à partir de la conduite d'évacuation (2) sort, **caractérisé en ce que** le tube distributeur comporte en plus de la conduite d'évacuation (2) une conduite de retour (3) formée le long de cette dernière et façonnée d'une pièce dans le tube distributeur pour le retour du fluide dans le récipient.

2. Distributeur selon la revendication 1, **caractérisé en ce qu'**un dispositif de raccord est prévu dans la zone de l'orifice de sortie pour raccorder la conduite de retour (3) à la conduite d'évacuation (2) en vue de ramener le fluide traversant la conduite d'évacuation dans le récipient.

3. Distributeur selon la revendication 1 ou 2, **caractérisé en ce que** la conduite d'évacuation (2) et la conduite de retour (3) ont essentiellement la même longueur.

4. Distributeur selon au moins une des revendications 1 à 3, **caractérisé en ce que** l'orifice de sortie de la conduite d'évacuation (2) a une disposition contiguë à un orifice d'entrée de la conduite de retour (3).

5. Distributeur selon l'une des revendications 2 à 4, **caractérisé en ce que** le dispositif de raccord est formé par un élément de coulée (12) qui est disposé dans une zone adjacente à l'orifice de sortie du tube distributeur, l'élément de coulée (12) pouvant être mis dans une position de pontage, dans laquelle la conduite d'évacuation (2) est reliée à la conduite de retour (3).

6. Distributeur selon la revendication 5, **caractérisé en ce que** l'élément de coulée (12) est pourvu d'un dispositif de préhension pour une commutation manuelle entre une position de pontage et une position de distribution.

7. Distributeur selon la revendication 5 ou 6, **caractérisé en ce que** l'élément de coulée (12) peut pivoter autour d'un axe pivotant.

8. Distributeur selon la revendication 7, **caractérisé en ce que** l'axe pivotant court essentiellement dans le sens longitudinal du tube distributeur.

9. Distributeur selon au moins une des revendications 1 à 8, **caractérisé en ce que** le tube distributeur est raccordé à un bloc de soupapes (7), et **en ce qu'**un canal d'amenée de fluide (9) et un canal de retour de fluide (20) qui sont reliés en conséquence à la conduite d'évacuation (2) et à la conduite de retour (3) sont réalisés dans le bloc de soupapes (7).

10. Distributeur selon au moins une des revendications 1 à 9, **caractérisé en ce que** le tube distributeur est encastré dans le bloc de soupapes (7).

11. Distributeur selon au moins une des revendications 1 à 10, **caractérisé en ce que** le cylindre d'extraction et/ou de dosage (11) est réalisé en une pièce avec le bloc de soupapes (7).

12. Distributeur selon au moins une des revendications 1 à 10, **caractérisé en ce que** le cylindre d'extraction et/ou de dosage (11) est vissé dans le bloc de soupapes (7).

13. Distributeur selon au moins une des revendications 1 à 12, **caractérisé en ce que** le cylindre d'extraction et/ou de dosage (11) entoure une garniture de cylindre réalisée en verre, en céramique, en matière plastique thermoplastique ou thermodurcissable, qui est intégrée, en particulier injectée, dans une partie de chemise (16) réalisée en une pièce avec le bloc de soupapes (7).

14. Distributeur selon au moins une des revendications 1 à 13, **caractérisé en ce que** le bloc de soupapes (7) est réalisé comme construction en ossature avec des traverses espacées les unes des autres.

15. Distributeur selon la revendication 14, **caractérisé en ce que** le bloc de soupapes (7) est pourvu d'un creux de réception pour accueillir une partie de pied du tube distributeur, sachant que le creux de réception est réalisé sur le bloc de soupapes (7) de sorte que ce creux traverse radialement une traverse s'étendant dans un plan axial.

16. Distributeur selon l'une des revendications 1 à 15, **caractérisé en ce qu'**un dispositif de positionnement du tube distributeur est prévu pour déterminer la position du tube distributeur au bloc de soupapes (7).

17. Distributeur selon la revendication 16, **caractérisé en ce que** le dispositif de positionnement du tube distributeur comporte une partie d'engrènement réalisée côté tube, qui peut engrener avec une partie opposée d'engrènement réalisée côté bloc de soupapes.

18. Distributeur selon la revendication 16, **caractérisé en ce qu'**une partie d'engrènement est réalisée au bloc de soupapes (7) dans la zone du creux de réception, qui peut engrener avec une partie opposée d'engrènement réalisée côté tube distributeur.

19. Tube distributeur pour un distributeur doseur avec un premier dispositif à canal (2) pour distribuer un fluide via un orifice de sortie, et un second dispositif à canal (3) qui s'étend le long du premier dispositif à canal (2), les dispositifs à canal (2, 3) étant façonnés d'une pièce moulés dans le tube distributeur et les deux dispositifs à canal (2, 3) pouvant être reliés l'un à l'autre dans la zone de l'orifice de sortie en vue de faire passer un fluide transporté à travers le premier dispositif à canal (2) dans le second dispositif à canal (3).

20. Tube distributeur selon la revendication 19, **caractérisé en ce que** celui-ci comporte un corps de base (1) allongé, à l'extrémité duquel est formé l'orifice de sortie, sachant que le corps de base (1) comporte un tronçon de liaison (6) à son extrémité détournée de l'orifice de sortie, tronçon par lequel le corps de base (1) peut être relié à un bloc de soupapes (7) du distributeur doseur.

21. Tube distributeur selon la revendication 19 ou 20, **caractérisé en ce que** le premier et le second dispositif à canal sont réalisés de sorte à être parallèles l'un par rapport à l'autre.

22. Tube distributeur selon l'une des revendications 19 à 21, **caractérisé en ce que** le premier et le second dispositif à canal sont moulés dans le corps de base (1).

23. Tube distributeur selon l'une des revendications 19 à 22, **caractérisé en ce que** la paroi définissant le premier et le second dispositif à canal est formée par le corps de base (1).

24. Tube distributeur selon au moins une des revendications 19 à 23, **caractérisé en ce qu'**au moins un des premiers et seconds dispositifs à canal traverse une partie terminale côté frontal du corps de base (1) dans la zone du tronçon de liaison (6).

25. Tube distributeur selon au moins une des revendications 19 à 24, **caractérisé en ce qu'**au moins un des premiers et seconds dispositifs à canal traverse une surface extérieure périphérique du corps de base (1) dans la zone du tronçon de liaison (6).

26. Tube distributeur selon l'une des revendications 19 à 25, **caractérisé en ce que** le premier dispositif à canal prévu pour la distribution d'un fluide via l'orifice de sortie traverse la partie terminale côté frontal du corps de base (1) et est en communication de fluide avec un canal d'amenée de fluide (9) formé dans le bloc de soupapes (7) via l'orifice d'entrée ainsi formé.

27. Tube distributeur selon l'une des revendications 19 à 26, **caractérisé en ce que** le second dispositif à canal formant la conduite de retour (3) traverse la surface extérieure périphérique du corps de base (1) dans la zone d'un tronçon de fixation et l'orifice de retour ainsi formé est en communication de fluide avec un canal de retour de fluide (10) formé dans le bloc de soupapes (7).

28. Tube distributeur selon l'une des revendications 20 à 27, **caractérisé en ce que** le tronçon de liaison est réalisé comme section de goupille injectée (8).

29. Tube distributeur selon l'une des revendications 20 à 27, **caractérisé en ce que** le tronçon de liaison est réalisé comme goupille filetée.

30. Tube distributeur selon l'une des revendications 19 à 29, **caractérisé en ce qu'**un élément de coulée (12) est prévu dans la zone de l'orifice de sortie du premier dispositif à canal, qui peut être mis dans une position de pontage dans laquelle le fluide s'écoulant de l'orifice de sortie du premier dispositif à canal (2) peut être ramené dans le second dispositif à canal (3).

31. Tube distributeur selon la revendication 30, **caractérisé en ce que** le corps de base (1) comporte une surface frontale plane (5), et **en ce que** l'élément de coulée (12) est placé sur la surface frontale plane (5) .

32. Tube distributeur selon la revendication 31, **caractérisé en ce qu'**au moins un disque de glissement (13, 14) est prévu entre l'élément de coulée (12) et la surface frontale plane (5), le disque de glissement (13, 14) comportant un orifice de passage qui forme au choix une communication de fluide entre l'orifice de sortie de la conduite d'évacuation (2) et la conduite de retour (3).

33. Tube distributeur selon l'une des revendications 19 à 32, **caractérisé en ce que** des canaux sont réalisés dans une surface frontale du tube distributeur et dans une surface frontale de l'élément de coulée.
